# EUROPEAN PATENT APPLICATION

(11) **EP 1 229 342 A2**
(43) Date of publication of application: **07.08.2002**
(21) Application number: 02075356.2
(22) Date of filing: 25.01.2002
(51) Int. Cl.: G01S 3/46, G01S 3/42, H01Q 3/26

(54) **Signal detection using a phased array antenna**

(30) Priority: 31.01.2001 GB 0102384
(71) Applicant: Qinetiq Limited, London, SW1E 6PD (GB)
(72) Inventor: Watson, Stephen, QinetiQ Malvern, Malvern, Worc WR14 3PS (GB); Dean, Micheal, QinetiQ Malvern, Malvern, Worc WR14 3PS (GB); Wallace, Neil, QinetiQ Malvern, Malvern, Worc WR14 3PS (GB); Smith, Andrew, QinetiQ Malvern, Malvern, Worc WR14 3PS (GB)
(74) Representative: Bowdery, Anthony Oliver

(57) **Abstract**

A method of reading information from a transmitter (70) using a phased array antenna (76) where the angle of incidence of a reflected signal (80) is detected and the phased array antenna (76) is adjusted to receive that signal (80) accordingly. A method for simultaneously detecting a plurality of radio frequency signals incident on a phased array antenna, and associated phased array control apparatus. Several embodiments provide methods for allowing the acquisition, tracking and reception of frequency modulated video signals transmitted by a mobile television radio-camera in a multipath environment.

## Description

This invention relates to a method and apparatus for receiving radio frequency (RF) signals using a phased array antenna, and in particular to a method for receiving such signals when the transmitter is not in the line of sight of the antenna.

A typical wireless RF system uses a transmit antenna (transmitter) and a receive antenna (receiver) to establish and support what is termed an RF link. In many environments, such as indoors or in enclosed outdoor spaces such as sports stadia, the transmitted signal will be reflected and may therefore reach the receiver via a multitude of different paths, each of different path length. These so called multipath effects can seriously degrade the quality of the received signal.

It is well established in the field of radio communications to use a directional receive antenna to reduce multipath effects. However, when a directional receive antenna is employed it must be constantly, and accurately, directed towards the transmitter.

An example of the use of a directional receive antenna is found in televising events. Radio cameras are used in Outside Broadcasts (OBs) to provide close in pictures of the event being televised. Currently most handheld radio cameras require use of a directional receiver that is rotated so that it is constantly aligned with the transmitter. This requirement is generally satisfied by using a standard dish antenna and a person (called a panner) who watches where the radio camera goes and rotates the directional receive antenna accordingly. The tracking must be precise and proves difficult if visibility is poor. In addition, if the transmitter moves behind an object the RF link is lost. Ensuring the receive antenna is pointed correctly becomes further complicated when the transmitter is moving.

Recently, digital radio camera systems have been developed in an attempt to overcome the problems associated with multipath effects. Coded modulation techniques have been demonstrated that actually use the reflected signals to improve the performance of the RF link. However, because of strict health and safety requirements limiting transmit power levels along with compromises in other system parameters, a directional antenna may still be needed if only to satisfy the link budgets. A more complete description of these digital systems can be found in 'OFDM For Wireless Multimedia Communications' by Richard Van Nee and Ramjee Prasad, Artech House, 2000.

The use of phased arrays, which are electronically controllable directional transmitter or receiver antennas, is well known in the art of RADAR technology. Traditional phased array antennas tend to comprise hundreds of elements, each with individual phase shifters working at the operating frequency of the antenna (often 1GHz and above). A description of such systems is given in N. Fourikis, 'Phased Array Based Systems And Applications', Wiley Interscience Publication, 1997, ISBN 0-471-01212-2.

WO 97/03367 describes a phased array device that can be produced at a much lower cost, and is much smaller in size, than the traditional phased array systems. Instead of phase shifting the signals received at each antenna element at the operating frequency, the RF signals are down converted to a first and then to a second intermediate frequency. During the second down conversion, the phase of the second intermediate frequency signal is changed by controlling the phase of the corresponding local oscillator. As the phase shifting is performed at a much lower frequency than the RF signal, inexpensive devices are available that can provide a high level of phase control. This allows phase shifting to be performed with greater accuracy thereby enabling the number of elements in a phased array antenna to be reduced. These devices are thus considerably cheaper to produce than the traditional phased array systems. Herein such devices are termed Low Cost (LC) phased array antenna.

It is an object of this invention to provide a method of acquiring and/or tracking a signal which operates even when there is no line of sight between the transmitter and receiver.

According to the first aspect of this invention a method of reading information from a transmitter, using a phased array antenna, comprises the steps of detecting the direction of incidence of a signal and adjusting the phased array antenna to receive a signal from that direction thereby establishing a radio frequency (RF) link wherein a reflected signal is used to establish the RF link.

Advantageously, the step of detecting the direction of incidence of a signal may comprise using the phased array antenna itself to detect incident signals and thereafter selecting which incident signal is to be used to establish the RF link.

The use of a phased array antenna according to the present invention permits reflected signals to be readily and quickly detected allowing the most suitable incident signal to be located and received to provide the RF link. This has significant advantages over the prior art where a "panner" would have to manually aim the receiver dish in certain directions to ascertain if a reflected signal could be received.

Conveniently, the acquisition scan can be performed across a given field of view, and may also be followed by a scan to a higher degree of accuracy across a restricted acquisition arc which is identified by the initial detection scan. The field of view may be up to the acquisition arc of the phased array antenna.

In a preferred embodiment, several reflected signals may be incident on the antenna from a plurality of directions and the direction of incidence that provides the optimum signal is used to provide the RF link. One criteria for determining the optimum signal is the signal strength. Alternatively, signal quality measurements could be used to ascertain which incident signal would provide the best RF link.

The method of reading information from a transmitter may further comprise the additional step, having established an RF link, of tracking any changes in the direction of incidence of RF signals by detecting signals incident on the phased array antenna from different directions, determining whether the phased array antenna should be adjusted to receive such a signal to provide the optimum RF link and adjusting the phased array antenna accordingly.

In a preferred embodiment, the tracking step comprises detecting signals incident on the phased array antenna across a reduced acquisition arc centred on the direction of the signal currently providing the RF link. The receive direction of the phased array antenna is then adjusted when a signal incident on the phased array antenna is stronger, or of a higher quality, than that which is being received to provide the RF link.

The present invention can be seen to allow the acquisition and tracking of reflected signals. Previously, the tracking of changes to the direction of incidence of signals was only possible with direct (i.e. line of sight) signals and only when the "panner" had a clear view of the transmitter and could see any change in its position.

The signal received by the phased array antenna may be an analogue or digital video signal and, advantageously, the frequency of the transmitted video signal is between 12.2GHz and 12.5GHz.

In a preferred embodiment, a Low Cost (LC) phased array antenna is used, and may be calibrated such that it can be adjusted to form a plurality of receive beams across its acquisition arc at each operating frequency. Preferably, the phased array is adjusted to form a plurality of receive beams across an approximately 100 degree acquisition arc with each beam separated by approximately 1 degree.

According to a second aspect of this invention, a method for maintaining an RF link with a transmitter using a phased array antenna comprises the steps of detecting the direction of incidence of a signal and adjusting the phased array to receive a signal from that direction thereby establishing an RF link, detecting any additional incident signals and any change in the direction of incidence of the signal being used to provide the RF link, selecting which incident signal provides the best RF link and adjusting the phased array antenna to receive the best signal accordingly, wherein the phased array antenna receives a reflected signal.

The present invention can be seen to have an advantage over the prior art "panner" methods when the line of sight between the transmitter and receiver is lost, for example if the transmitter were to pass behind a solid object or an object was to move in-between the transmitter and antenna. In this case, any reflected signal reaching the phased array antenna may still be located and tracked allowing a continuous RF link to be maintained. Previously, the "panner" would generally lose the capability to track the signal and hence there would be a break in the RF link.

In a preferred embodiment, signals incident on the phased array antenna across a reduced acquisition arc centred on the direction of the signal currently providing the RF link may be detected. The signal incident on the phased array antenna which provides the best RF link may be the strongest signal or may be the signal that provides the highest quality RF link. The signal may be an analogue or digital video signal and, advantageously, the frequency of the transmitted video signal is between 12.2GHz and 12.5GHz.

Advantageously, a Low Cost (LC) phased array antenna can be used, and may be calibrated such that it can be adjusted to form a plurality of receive beams across its acquisition arc at each operating frequency. Preferably, the phased array is adjusted to form a plurality of receive beams across an approximately 100 degree acquisition arc with each beam separated by approximately 1 degree.

According to a third aspect of this invention a method of reading information from a transmitter using a phased array antenna, which is adapted so as to simultaneously receive two or more incident signals, comprises the steps of detecting the direction of incidence of a signal and adjusting the phased array antenna to receive a signal from that direction thereby establishing an RF link with the transmitter, detecting signals incident on the phased array antenna from different directions concurrently with the receipt of information over the RF link, determining whether any signal incident on the phased array antenna provides a better RF link than the signal currently providing the RF link, and adjusting the phased array antenna to receive a signal from that direction accordingly.

An advantage of this invention over the prior art methods is that the simultaneous formation of a plurality of receive beams enables RF links to be established using certain incident signals, whilst simultaneously searching for signals incident from other directions that may provide better RF links.

In a preferred embodiment, RF links are established with two or more transmitters and, concurrent with the receipt of information over the established RF links, signals incident on the phased array antenna from different directions are also detected and the steps of determining whether any signal incident on the phased array antenna provides a better RF link than the signal currently providing the RF link and adjusting the phased array antenna to receive a signal from that direction accordingly, are performed for each RF link.

Advantageously, the detection of signals incident on the phased array antenna from different directions concurrently with the receipt of information over the RF link involves using the phased array antenna to detect signals incident on the phased array across a given field of view.

The acquisition scan may be performed across a given field of view, and may also be followed by a scan to a higher degree of accuracy across a restricted acquisition arc which has been identified by the initial detection scan. The field of view may be up to the acquisition arc of the phased array antenna.

In a preferred embodiment, a Low Cost (LC) phased array antenna is used. Conveniently, the LC phased array antenna is calibrated such that it can be adjusted to form a plurality of receive beams across its acquisition arc at each operating frequency and can simultaneously form two or more receive beams. The phased array antenna may be adapted so as to receive two or more incident signals that are incident on the same phase centre or to simultaneously receive two or more incident signals that are incident on two or more phase centres.

A computer program, which may be held on an appropriate storage medium, may be used to implement the method described above.

According to a fourth aspect of this invention, a control apparatus for a phased array antenna comprises detection means capable of detecting the direction of incidence of one or more signals and beamforming hardware capable of adapting the phased array antenna to simultaneously receive a plurality of incident signals so as to establish one or more RF links.

In a preferred embodiment, the control apparatus further comprises tracking means such that any change in the direction of incidence of a signal which is being used to support an RF link is detected and the beamforming hardware adapts the phased antenna to receive the signal from that changed direction accordingly.

Advantageously, the beamforming hardware can adapt the phased array so as to simultaneously receive a plurality of signals that are incident on the same phase centre or a plurality of signals that are incident on two or more phase centres.

Conveniently, an LC phased array antenna may be used and in a preferred embodiment the LC phased array antenna may contain a linear array of 16 antenna elements. Preferably, the control apparatus may receive analogue, or digital, video signals. The frequency of such video signals is preferably between 12.2GHz and 12.5GHz.

The invention will now be described, by way of example only, with reference to the accompanying figures wherein;
Figure 1 shows the principle of operation of a phased array receiver;
Figure 2 illustrates the architecture of an LC phased array receiver for tracking an RF signal;
Figure 3 illustrates the reception of direct (line of sight) and reflected signals; and
Figure 4 illustrates the use of a dual beam phased array receiver.

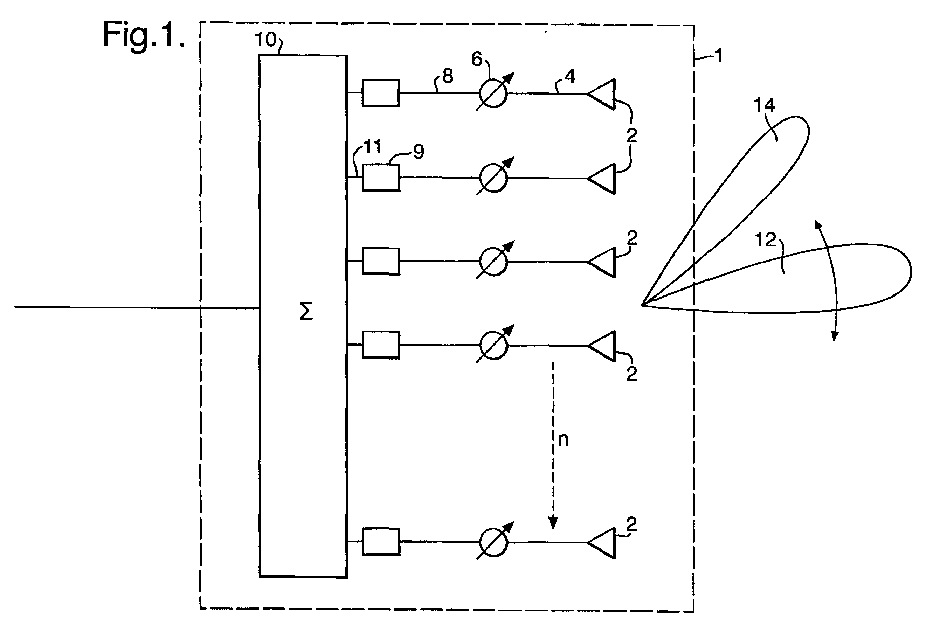

The operation of a general phased array antenna will now be described with reference to figure 1.

A phased array antenna receiver (1) comprises n antenna elements (2) which provide electrical signals (4) derived from an incident RF signal (not shown). Phase shifters (6) provide a phase shift to the electrical signals (4) producing phase shifted electrical signals (8). The phase shifted electrical signals (8) are then attenuated by an attenuation means (9) producing signals that are both phased shifted and attenuated (11). The signals that are both phased shifted and attenuated (11) are then combined by a combiner (10).

It is possible to make the phased array antenna receiver particularly sensitive to radiation incident from a certain direction. This is done by controlling both the phase shift applied to each of electrical signals (4), and the relative amplitude weighting given to each of the phased shifted electrical signals (8) by the attenuation means (9). As described later in detail, there are several techniques of applying phase shifts to the electrical signals (4).

Selecting phase shifts and amplitude weightings that cause the phased array antenna receiver (1) to have directionally dependent RF signal reception properties is termed beam forming. For example, figure 1 shows a beam (12) that could be formed by applying certain phase shifts and amplitude weightings to the electrical signals (4) that are produced by the n antenna elements (2). Alternatively, different phase shifts and amplitude weightings could be applied to produce another beam (14).

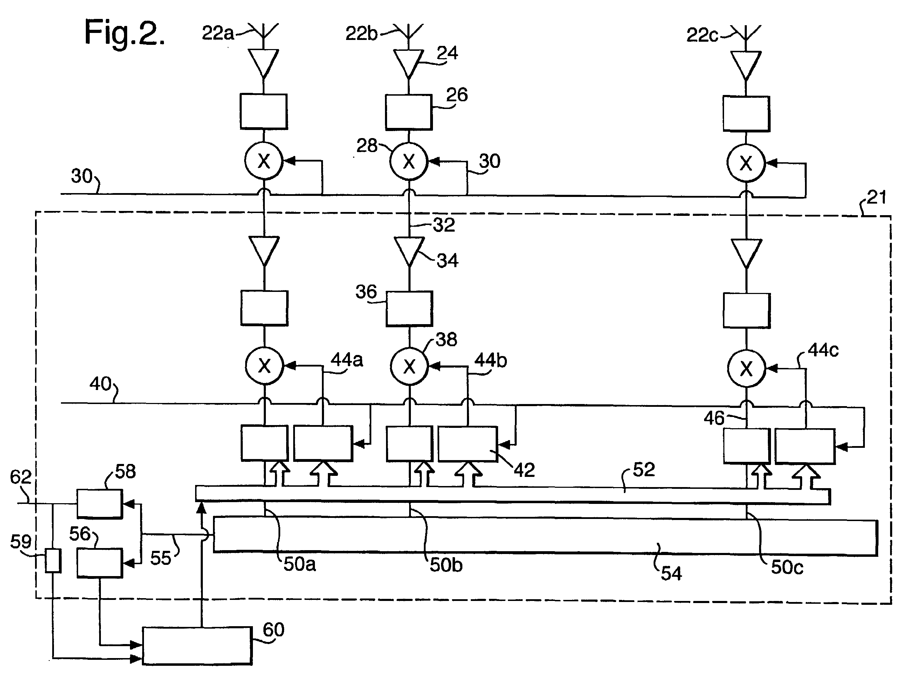

A receive beam, also simply termed a beam, is the angular range over which the detector is sensitive to incident signals. In other words, a receive beam can be considered as a three dimensional area in space and the phased array antenna will be sensitive to any signal incident on it from that three dimensional area. In reality, it is unlikely that perfect beams would be formed; each receive beam would have associated "sidelobes". Methods of beamforming and the existence and suppression of sidelobes (as described for LC systems with reference to figure 2) are well known to persons skilled in the art of phased array RADAR.

The principle of operation of an LC phased array antenna will now be described with reference to figure 2.

The traditional design philosophy for phased array RADAR systems has been that each element uses an individual phase shifter for phase control. The phase shifter is typically a Monolithic Microwave Integrated Circuit (MMIC) and is characterised by a high cost due to limited production runs and the fact that the device has to function at the operating frequency of the antenna (often 1GHz and above). The phase shifter is controlled by a digital input. Standard devices are 4 bit giving 22.5° of phase resolution, whilst more complex options have 6 bits that provide approximately 6° of phase resolution. As a result of this relatively low level of phase control, in order for the antenna to be able to scan the beam in 1° or sub-degree steps, hundreds or thousands of elements are required. Hence traditional phased arrays have used hundreds or thousands of expensive MMIC phase shifters and consequently have been utilised almost exclusively by the military for large installations.

It is possible to avoid using individual phase shifters for phase control without the need to employ expensive digital beamforming solutions using the LC beamforming architecture disclosed in WO 97/03367.

An LC phased array receiver comprises a plurality of antenna elements (22a, b, c). The electrical signal produced by each antenna element when receiving an RF signal is amplified by low noise amplifiers (24), passes through image reject filters (26) before being down-converted to a first intermediate frequency (IF) signal (32) by means of microwave mixers (28). A microwave local oscillator signal (30) is used by the microwave mixers (28) in the down conversion process. The first intermediate frequency signals (32) are then fed into the beamforming hardware (21).

On entering the beamforming hardware (21) the first intermediate frequency signals (32) passes through amplifiers (34), and image reject filters (36), before being down-converted to second intermediate frequency signals (46) by intermediate frequency mixers (38). During this second down-conversion process, phase shifts are introduced by changing the phase of the second local oscillator (LO) signals (44a,b,c) using phase shifter means (42) and are then applied to each of the intermediate frequency mixers (38). The phase shift introduced by the phase shifter means (42) is controlled by a digital control bus (52), and produces second intermediate frequency phase shifted electrical signals (50a,b,c).

Because the phase shifter means (42) used to phase shift the second LO signal operates at a frequency much lower than the RF signal, inexpensive vector modulator devices can be used. A person skilled in the art would be aware of the various types of vector modulator device that would be suitable for this purpose. Typical vector modulator devices, such as those used in mobile phones, are controlled by low cost 12 bit digital-to-analogue converters and provide a very high level (sub 1°) of phase control.

The second intermediate frequency phase shifted electrical signals (50a,b,c) are combined in the combiner (54). A suitable frequency for the second IF electrical signal is 70MHz. After being combined, the resultant signal (55) is split two ways. One part is cabled into a power detect module (56) whilst the other passes through an Automatic Gain Control (AGC) module (58). After the AGC module, the signal is again split two ways. One part is routed as the output of the antenna (62), whilst the other passes through a suitable demodulator or decoder module (59).

The output of the power detect module (56) can be used by the microcontroller (60) to determine the best position to point the receive beam. The microcontroller (60) also controls, over the digital bus (52), the phase shift that is applied to each second local oscillator signal (44a,b,c) by the phase shifter means (42). The AGC module (58) works to keep the output signal (62) at a constant power level of +5dBm without compromising the linearity of the receive chain. The power detect module (56) and the AGC module (58) work independently of the signal's modulation, and as a result the phased array antenna can acquire and track analogue or digital signals.

The decoder module (59) demodulates or decodes part of the output signal (62) into baseband components. In the case of FM video, the various components of the video can then be measured and may be used to assess the quality of the video signal that is being received. It is thus possible for the microcontroller (60) to use a video signal quality measurement from the decoder module (59) instead of, or as well as, the signal strength measurements provided by the power detect module (56) when deciding how to direct the receive beams.

The output signal (62) can be routed from the phased array to an Antenna Control Unit (not shown) via a standard tri-axial cable. This cable can also be used to support the control and telemetry data between the phased array and the Antenna Control Unit (ACU) and provide a power supply for the array. The ACU can be located at a convenient position, which may be remote to the phased array antenna itself.

In this embodiment the ACU's function is to provide a suitable interface which the operator can use to control the phased array. However, a person skilled in the art would recognise that many different methods of routing the received signal and control data could be employed (e.g. fibre optic, low frequency radio data links). In addition, the ACU can be fitted with a decoder or demodulator as specified by the user. These options do not affect the fundamental principles underlying this invention and are merely workshop variations which would be immediately apparent to a person skilled in the art.

In order to obtain a discrete set of beams from an LC phased array, the phased array antenna is calibrated before use. A discrete set of beams (for example +50° to -50° in 1° steps) can be calibrated for a given operating frequency or for groups of frequencies within a given band. For each beam there is a phase and amplitude weighting for each element of the antenna. The calibration data is stored, and subsequently used to allow the formation of a given directional beam for a given frequency. During calibration the absolute phase between each of the calibrated beams can be controlled so that it is the same value for each beam. This helps to minimise phase interference whilst switching beams.

In addition to performing a calibration at each operating frequency it is also possible to perform several different calibration types. One set implements zero amplitude attenuation on each element. This provides maximum gain in the main beam, but the sidelobe levels are not controlled. Conversely, a fully weighted calibration set provides maximum sidelobe suppression which results in a reduction in the receiver's susceptibility to multipath effects. The disadvantage of a fully weighted calibration is that the algorithms used to synthesise such beams tend to reduce the gain of the antenna. In addition to the two calibration types described here, there are a multiplicity of calibration options that can be used for a variety of beam patterns. Such calibration types are well known to those skilled in the art of phased array RADAR technology.

A result of the high level of phase control provided by the LC system described above is that beams can be synthesised and scanned in sub-degree steps from arrays of very few elements (for example 8 or 16 elements). It is also possible to have modular RF front end and beamforming circuits. A typical module consists of 8 radiating elements complete with superheterodyne receiver and phase control circuit. The modules can also be grouped together so as to create a linear or planar phased array antenna that satisfies the system requirements.

For example, two 8 element modules have been combined to produce a 16 element linear phased array antenna. More modules could be combined, for example if a more directional antenna were required. A larger array would have more gain that could support an RF link from a given transmitter over a longer distance. The 16 element array will support an RF link with a conventional handheld radio camera over distances of up to 1km.

The acquisition arc (i.e. lateral angular range over which beams can be formed) for a 16 element phased array is approximately 100°. Scanning beyond ±50° is possible but at the expense of some degradation in the beam pattern such as increased sidelobe levels and a broadening of the main beam. Supporting an RF link over larger angles is achievable in several ways. A combination of receivers can be located so as the transmitter is always within the acquisition arc of the network, with handovers between arrays occurring automatically at the various boundaries. Alternatively a single receiver can be mounted onto a turntable and the servo driven by control signals generated by the array. A third option is to use a curved RF front end instead of a linear row. Curved surface and full circular arrays have been developed that provide 360° of coverage.

A further advantage of LC phased array devices over traditional phased arrays is that they work independently of the operating frequency of the antenna. Because the beamforming is performed at a low intermediate frequency, the RF frequency of the antenna is unrestricted. Whatever the operating frequency, the RF signal is downconverted to the necessary IF and the phase control implemented using the second IF mixer. This type of detector is thus totally 'modular' in frequency; it can be used to receive RF signal of any frequency.

For FM video link applications, frequencies within the 2GHz or 12GHz radio camera bands are generally used. For example, 12 25MHz channels could be provided between 12.2125GHz and 12.4875GHz. An LC phased array device can thus be built which can track a radio camera transmitting at an allocated 12GHz frequency channel with an output of 70MHz, +5dBm (the industry standard).

It is also possible to include additional sets of beamforming hardware in phased array devices. Simultaneous formation of a plurality of receive beams is well known to a person skilled in the art of phased array RADAR. To simultaneously form multiple receive beams using an LC device, the first intermediate frequency signals (32) are divided and supplied to a plurality of sets of beamforming hardware (21). Each set of beamforming hardware produces output signals from its power detect and AGC modules. A single microcontroller can then be used to direct the receive beams associated with each set of beamforming hardware.

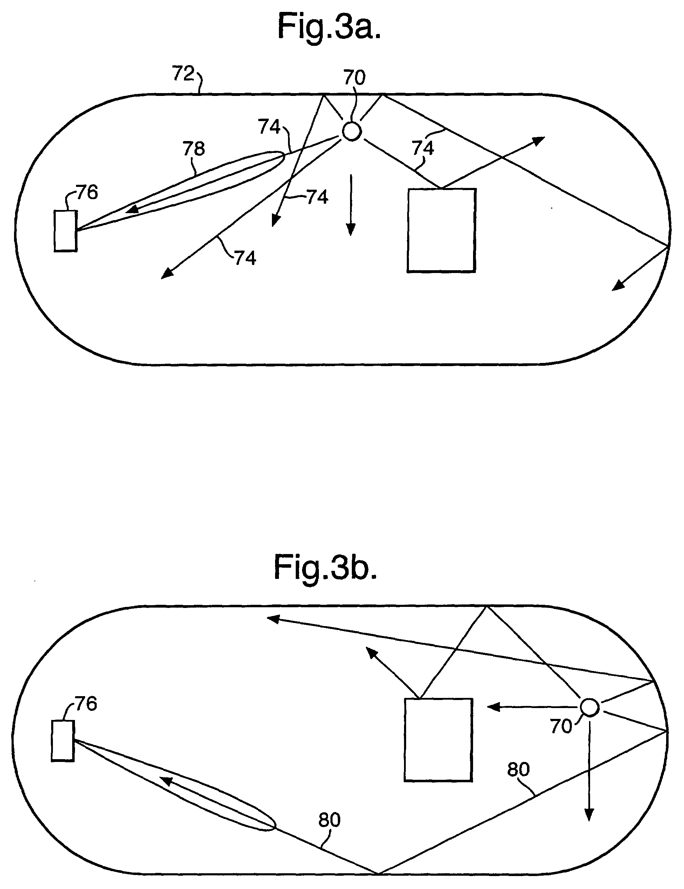

The use of a phased array receiver to acquire and track a transmitted RF signal will now be described, with reference to figure 3. Although the LC phased array receiver described with reference to figure 2 is particularly suitable for implementing the transmitter tracking methods described below, a person skilled in the art would recognise that any phased array receiver could be employed.

When an RF signal is transmitted by an omni-directional transmitter (70) in an enclosed environment, such as a sports stadium (72), a plurality of multipath RF signals (74a, 74b, 74c, 74d, 74e) are produced. If an omni-directional receiver were used to receive the transmitted signal the many multipath signals, all of which are slightly out of phase due to travelling along paths of different length, would all be received producing a resultant received signal that has a high level of multipath interference.

As shown in figure 3a and as described above, a phased array receiver (76) can be used to form a directional receive beam (78) which reduces susceptibility to multipath interference effects. Figure 3b shows the use of a phased array receiver (76) to receive a reflected signal (80) from an omni-directional transmitter (70) in the absence of any direct line of sight path.

The phased array receiver system must initially ascertain the angle of incidence of a suitable RF signal. This is generally performed by determining the direction from which the strongest transmitted signal originates. Alternatively, the angle of incidence that provides a signal of acceptable strength with the lowest level of multipath interference (i.e. provides the highest quality signal) could be selected. The strongest, or highest quality, signal may be the line of sight signal, but it may also be a reflection. The process of determining the angle of incidence of a suitable RF signal is herein termed an acquisition scan.

For a full acquisition scan, a typical LC phased array of the type described with reference to figure 2 can sequentially load a full set of beams from the selected calibration set (e.g. from +50° to -50° in 1° steps). For each beam loaded, the power of the received signal is measured and the beam that gave the highest reading is selected as the centre beam for a 'mini-scan'. A mini-scan is the same as a full scan but over a much narrower range, and possibly of a higher angular resolution.

The operator can control the angular range over which the initial scan takes place and the number of degrees between each step (1°, 2° etc), or alternatively can chose to load a single fixed beam. Using a typical LC phased array of the type described with reference to figure 2, acquisition of a signal over a 100° arc takes approximately 0.4 seconds. Faster rates can be achieved by using a faster processor.

The result of the acquisition scan determines the angle of incidence of the preferred RF signal. Once a preferred signal has been acquired, any change in the angle of incidence of the signal on the phased array receiver can be tracked. The initiation of a tracking routine can be controlled manually, or automatically executed at the end of the acquisition scan. The tracking routine allows for any movement of the transmitter, phased array receiver or intervening objects.

A person skilled in the art would recognise that there are several tracking routines that may be used. An example of a tracking routine is free running dither. In this routine the array loads a beam first to the left of the current position, and then to the right. The received signal power of the two dithered beams is measured and the results compared with that of the current centre beam. The beam that gives the highest value then becomes the centre beam for the next dither routine.

According to the environment, the number of beams that make up a single dither routine as well as the angular separation between each beam can be varied. An acquisition scan can also be activated periodically, if the signal strength drops below a certain threshold or manually by an operator of the system.

When tracking an RF transmitter, the phased array receiver may initially use the line of sight path to support the RF link. If the line of sight link is lost, the phased array receiver can automatically start to scan the acquisition arc and locate any reflected signals being produced as a result of the operating environment. The strongest, or highest quality, reflected signal can then be acquired and tracked until the line of sight path becomes available again. In this way an RF link can be supported, even when the RF transmitter is not line of sight. As described previously, the use of a phased array antenna to support an RF link in the absence of a direct line of sight between the transmitter and receiver has numerous advantages over the conventional panner type system.

There will also be some situations when the line of sight path may not provide the best RF link performance; for example when both multipath signals and the line of sight signal are incident on the phased array receiver within the receive beam. In this case the phased array antenna can select not to acquire the line of sight signal, but instead acquire and track a reflected signal that provides a higher quality video image.

It should be noted that the system can also be used if the transmitter and receiver are in fixed positions, but objects move into the direct line of sight or if objects from which the signal is being reflected change position.

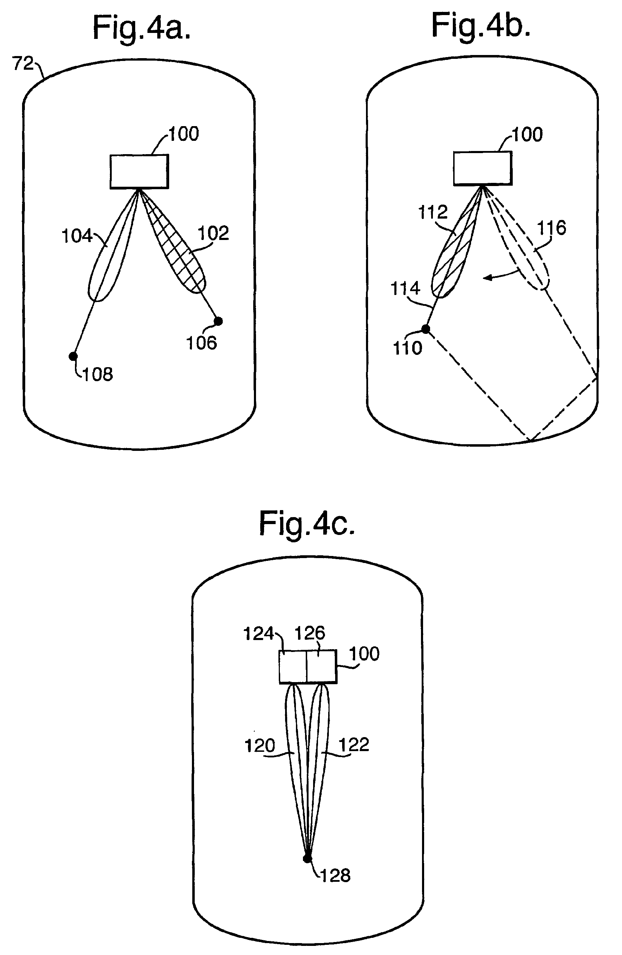

As described above with reference to figure 2, a plurality of independent receive beams may be formed using an LC phased array device. The use of multiple receive beams to acquire and track a transmitted signal will now be described with reference to figure 4.

Figure 4a shows a single phased array receiver (100), simultaneously forming a first receive beam (102) and a second receive beam (104). The first receive beam (102) and the second receive beam (104) can independently acquire and track a first transmitter (106) and a second transmitter (108). The first transmitter (106) and the second transmitter (108) must be transmitting at different frequencies.

In this configuration, the beams are independently steered and hence support links to transmitters operating at different frequencies within the system bandwidth. In this way a single antenna array, with a plurality of beam-forming hardware, could be used to track a plurality of transmitters.

Alternatively, two independent beams operating at the same frequency can be used to improve tracking. Figure 4b shows a single phased array receiver (100), forming a first receive beam (112) that acquires and tracks one signal (114) transmitted by transmitter (110). A second receive beam (116) then sequentially forms beams across the acquisition arc searching for the optimum receive beam direction for the first receive beam (112) to adopt. Once an optimum receive direction has been established by the second receive beam, the first receive beam is directed accordingly.

The example given in figure 4b refers to two independent beams, but this should not be seen as limiting. One or more beams can be dedicated to supporting RF links, whilst one or more additional beams can be continually scanning the acquisition arc searching for the beam position that will provide the best link performances for the next time slot.

In addition to the use of independent beams formed from a single phase centre as described above, the phased array antenna can be configured so as to produce two or more beams from separate phase centres; this is called beam diversity and is well known to those skilled in the art of phased array RADAR. The beam diversity is obtained by using a subset of the array elements of the antenna to form beams. For example, if a 16 element LC array were used, two sets of 8 elements could be used so as to form beams from two diverse phase centres.

Figure 4c shows how two independent beams (120 and 122) can be formed from two phase centres (124 and 126) on an LC phased array antenna. Each set of beams originating from different phase centres can be controlled independently of the other beam sets. The beams can be controlled to track a single, or multiple, transmitters in the same way as beams originating from a single phase centre as described with reference to figures 4b and 4a.

If, as shown in figure 4c, the two beams (120 and 122) both acquire and track a single transmitter (128) two separate links with the transmitter are provided. In this case, each link with the transmitter will be susceptible to different multipath interference effects because of the different position of each phase centre. The beam providing the signal output of the highest quality can thus be selected to provide the RF link. The use of diverse beams can hence be used to provide greater resistance to multipath effects.

The three examples described with reference to figures 4a, 4b and 4c should not be seen as limiting. A person skilled in the art would immediately recognise how any of the techniques employed for tracking a single camera could be employed when tracking a plurality of cameras using a single antenna. Similarly, the techniques described with reference to figures 4a and 4b could be performed for each of the diverse beams described with reference to figure 4c.

## Claims

1. A method of reading information from a transmitter using a phased array antenna, comprising the steps of detecting the direction of incidence of a signal and adjusting the phased array antenna to receive a signal from that direction thereby establishing a radio frequency (RF) link wherein a reflected signal is used to establish the RF link.

2. A method of reading information from a transmitter as claimed in claim 1 wherein the step of detecting the direction of incidence of a signal comprises using the phased array antenna to detect incident signals and thereafter selecting which incident signal is to be used to establish the RF link.

3. A method of reading information from a transmitter as claimed in any preceding claim wherein the step of detecting the direction of incidence of a signal involves detecting signals incident on the phased array antenna across a given field of view.

4. A method of reading information from a transmitter as claimed in claim 3 wherein after the step of detecting signals incident on the phased array antenna across a given field of view, the direction of incidence is determined to a higher degree of accuracy across a restricted acquisition arc as identified by the initial detection scan.

5. A method of reading information from a transmitter as claimed in claim 3 or claim 4 wherein the given field of view is the acquisition arc of the phased array antenna.

6. A method of reading information from a transmitter as claimed in any of claims 2-5, wherein the direction of incidence that provides the optimum signal is used to provide the RF link.

7. A method of reading information from a transmitter as claimed in claim 6 wherein the criteria for determining the optimum signal is the signal strength.

8. A method of reading information from a transmitter as claimed in any preceding claim and comprising the additional step, having established an RF link, of tracking any changes in the direction of incidence of RF signals by detecting signals incident on the phased array antenna from different directions, determining whether the phased array antenna should be adjusted to receive such a signal to provide the optimum RF link and adjusting the phased array antenna accordingly.

9. A method of reading information from a transmitter as claimed in claim 8, wherein the additional step of detecting signals incident on the phased array antenna only occurs across a reduced acquisition arc that is centred on the direction of the signal currently providing the RF link.

10. A method of reading information from a transmitter as claimed in claim 8 or claim 9 wherein the phased array antenna is adjusted when a signal incident on the phased array antenna is stronger than that which is being received to provide the RF link.

11. A method of reading information from a transmitter as claimed in claim 8 or claim 9 wherein the phased array antenna is adjusted when a signal incident on the phased array antenna is of a higher quality than that which is being received to provide the RF link.

12. A method of reading information from a transmitter as claimed in any preceding claims wherein the signal is a video signal.

13. A method of reading information from a transmitter as claimed in claim 12 wherein the video signal is analogue.

14. A method of reading information from a transmitter as claimed in claim 12 wherein the video signal is digital.

15. A method of reading information from a transmitter as claimed in claims 12 to 14 wherein the frequency of the transmitted video signal is between 12.2GHz and 12.5GHz.

16. A method of reading information from a transmitter as claimed in any preceding claim wherein a Low Cost (LC) phased array antenna is used.

17. A method of reading information from a transmitter as claimed in claim 16 wherein the LC phased array antenna is calibrated such that it can be adjusted to form a plurality of receive beams across its acquisition arc at each operating frequency.

18. A method of reading information from a transmitter as claimed in claim 17 wherein the phased array is adjusted to form a plurality of receive beams across an approximately 100 degree acquisition arc.

19. A method of reading information from a transmitter as claimed in any of claims 17 to 18 wherein each receive beam is separated by approximately 1 degree.

20. A method for maintaining an RF link with a transmitter using a phased array antenna comprising the steps of;
detecting the direction of incidence of a signal and adjusting the phased array to receive a signal from that direction thereby establishing an RF link,
detecting any additional incident signals and any change in the direction of incidence of the signal being used to provide the RF link,
selecting which incident signal provides the best RF link and adjusting the phased array antenna to receive the best signal accordingly,
wherein the phased array antenna receives a reflected signal.

21. A method of reading information from a transmitter using a phased array antenna, which is adapted so as to simultaneously receive two or more incident signals, comprising the steps of;
a) detecting the direction of incidence of a signal and adjusting the phased array antenna to receive a signal from that direction thereby establishing an RF link with the transmitter,
b) detecting signals incident on the phased array antenna from different directions concurrently with the receipt of information over the RF link,
c) determining whether any signal incident on the phased array antenna provides a better RF link than the signal currently providing the RF link, and
d) adjusting the phased array antenna to receive a signal from that direction accordingly.

22. A method of reading information from a transmitter according to claim 21, wherein RF links are established with two or more transmitters and, concurrent with the receipt of information over the established RF links, signals incident on the phased array antenna from different directions are also detected and the steps of determining whether any signal incident on the phased array antenna provides a better RF link than the signal currently providing the RF link and adjusting the phased array antenna to receive a signal from that direction accordingly, are performed for each RF link.

23. A method of reading information from a transmitter according to any one of claims 21 to 22 wherein the step of detecting signals incident on the phased array antenna from different directions concurrently with the receipt of information over the RF link involves using the phased array antenna to detect signals incident on the phased array across a given field of view.

24. A method of reading information from a transmitter as claimed in any of claims 21 to 23 wherein a Low Cost (LC) phased array antenna is used.

25. A method of reading information from a transmitter as claimed in claim 24 wherein the LC phased array antenna is calibrated such that it can be adjusted to form a plurality of receive beams across its acquisition arc at each operating frequency and can simultaneously form two or more receive beams.

26. A method of reading information from a transmitter according to any of claims 21 to 25 wherein the phased array is adapted so as to simultaneously receive two or more incident signals that are incident on the same phase centre.

27. A method of reading information from a transmitter according to any of claims 21 to 25 wherein the phased array is adapted so as to simultaneously receive two or more incident signals that are incident on two or more phase centres.

28. A method of reading information from a transmitter as substantially hereinbefore described with reference to figures 3 and 4.

29. A computer program for controlling a phased array receiver incorporating the method of any preceding claim.

30. A storage medium holding a computer program according to claim 29.

31. A control apparatus for a phased array antenna comprising detection means capable of detecting the direction of incidence of one or more signals and beamforming hardware capable of adapting the phased array antenna to simultaneously receive a plurality of incident signals so as to establish one or more RF links.

32. A control means for a phased array antenna as claimed in claim 31 wherein the control apparatus further comprises tracking means such that any change in the direction of incidence of a signal which is being used to support an RF link is detected and the beamforming hardware adapts the phased antenna to receive the signal from that changed direction accordingly.

33. A control means for a phased array antenna as claimed in any of claims 31 to 32 wherein the beamforming hardware adapts the phased array so as to simultaneously receive a plurality of signals that are incident on the same phase centre.

34. A control means for a phased array antenna as claimed in any of claims 31 to 32 wherein the beamforming hardware adapts the phased array so as to simultaneously receive a plurality of signals that are incident on two or more phase centres.

35. A control means for a phased array antenna as claimed in any of claims 31 to 34 wherein an LC phased array antenna is used.

36. A control means for a phased array antenna as claimed in claim 35 wherein the LC phased array antenna contains a linear array of 16 antenna elements.

37. A control means apparatus as hereinbefore described with reference to figures 2 and 4.
